(19) Europäisches Patentamt / European Patent Office / Office européen des brevets

(11) **EP 3 091 499 A1**

(12) **EUROPEAN PATENT APPLICATION**
published in accordance with Art. 153(4) EPC

(43) Date of publication:
**09.11.2016 Bulletin 2016/45**

(51) Int Cl.:
*G06Q 50/06* (2012.01)     *G06Q 50/16* (2012.01)
*G06Q 30/00* (2012.01)     *G06F 17/00* (2006.01)

(21) Application number: **14876000.2**

(22) Date of filing: **16.12.2014**

(86) International application number:
**PCT/CL2014/000078**

(87) International publication number:
**WO 2015/100507 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.12.2013 CL 2013003810**

(71) Applicant: **Universidad de Talca**
**Talca 3465548 (CL)**

(72) Inventors:
• **TORRES FUCHSLOCHER, Carlos Fernando Edgardo**
  **Curicó 3341488 (CL)**
• **DEL CAMPO HITSCHFELD, María Luisa**
  **Curicó 3341488 (CL)**
• **ROJAS FUENTES, José Luis**
  **Lontué 3341488 (CL)**

(74) Representative: **Cabinet Plasseraud**
  **66, rue de la Chaussée d'Antin**
  **75440 Paris Cedex 09 (FR)**

(54) **SYSTEM AND METHOD FOR MONITORING AND MANAGING THE ENERGY EFFICIENCY OF BUILDINGS**

(57) The invention relates to a system and method for monitoring and managing the energy efficiency of buildings, comprising data-acquisition devices, a communication network, a server that stores and processes the information, and a procedure for optimising energy consumption forecasts and economic evaluation of improvement alternatives. The monitoring and management method comprises the following steps: measuring, transmitting, receiving and transferring data; and processing, storing and interfacing with the user, wherein the interface with the user comprises three main modules, namely the alarm module, the monitoring module and the investment options module. In particular, the investment options module is for generating investment recommendations on the basis of improvement alternatives in terms of energy and/or services efficiency, with economic evaluations of the impact and profitability of the implementation of any of the proposed improvement alternatives.

FIG. 1

EP 3 091 499 A1

**Description**

The present invention relates to a system and method for monitoring and managing energy efficiency and building services, and is designed for facility administrators.

The proposed system comprises a plurality of data acquisition devices, a communications network, a server that stores and processes information, and a procedure for optimizing forecasts and assessing alternatives for economic improvement. The proposed invention provides timely information about building breakdowns, proposes solutions for consumption patterns, and delivers recommendations regarding applicable technological alternatives for improving the efficiency of the building without the need for additional specialized consulting services.

BACKGROUND OF THE INVENTION

All buildings normally have systems for HACV, lighting, water, hot water, gas, security, etc. These systems create expenses that add up to significant management and operation cost.

In view of the above, there is a need to optimize the operation of the building's different services, in order to reduce their total operating costs as much as possible.

While it is possible to greatly reduce spending on a building's energy and services costs by optimizing the operating parameters (timetables, temperature, frequency, etc.) of the various services, often there is potential for even greater savings by investing in the building's equipment or making improvements to its envelope. Because this optimization potential requires investments and the assessment of these investments requires a great deal of information and external consulting services, this potential is often not exploited.

The use of building automation systems (BAS) which automatically control the operation of the building's services based on parameters set by the user is known in the prior art. So too is the use of Building Energy Management Systems (BEMS) which in addition to providing real-time monitoring and control of services such as heating, ventilation, air conditioning, hot water, lighting and electricity consumption generally, also seek to operate the system with high levels of efficiency and economy, in some cases providing recommendations designed to improve energy performance.

For example, patent US7781910 discloses a system that uses a computer as an interface that is connected to a main bus or cable, which also connects to a web server, which provides access to the internet. A computer provides data analysis, and a master controller, which includes one or more programmable logic controllers (PLC), is able to control one or more modules. The modules comprise heating, ventilation and air conditioning (HVAC), security systems, fire systems and energy management systems devices.

Similarly, patent US8055386 discloses a building automation system comprising a plurality of end devices, at least one communication network, and a protocol-independent server engine. This system comprises a server, preferably located in a central location, which operates as head of the control station, for other applications such as a network of computers or microprocessors. The server is part of a local network and communicates via internet, intranet or other type of communication network. It also comprises communication means that facilitate communication between the server and the other components or devices and a controller and supervisor that connect to the BAS.

US6327541 discloses an electronic energy management system with a power distribution network, which provides power from a source to the sites predetermined by the user. A plurality of measuring devices are connected to each site and the user monitors energy consumption. The system comprises a data acquisition subsystem, which obtains information from power meters in use. Electronic data storage at a remote location and an electronic communication subsystem give the user access to the stored data.

Commercially available BEMS include: IBM Tririga Energy Optimization, Samsung Smart BEMS, First Fuel Building Energy Analytics, Trend Bems, Spinwave systems and Tracer Summit from Trane. In general, all of these systems monitor energy consumption in real-time, report and analyze energy usage statistics and trends, and issue alerts if anomalies or instances of sub-optimal performance are detected in order for the user to take corrective measures. In some cases they are supplemented with some automation routines for such corrective measures, which allow the system to quantify their impact in energy and economic terms, but only after the corrective measures have been taken, not before.

IBM Tririga combines real-time monitoring systems with facilities and events management. The gathered information is processed and used to display statistics such as maximum monthly electricity demand and energy usage trends, and to create a wide variety of graphics displays to represent such consumption and trends. The software's analytical capabilities include analytical rules designed to detect sub-optimal energy situations. The system helps to analyze and optimize the installation's operations, reduce energy costs and issues corrective measure alerts for high-energy-consumption equipment. The delivery of real-time information also allows for the creation of work orders to correct the detected anomalies.

The Samsung Smart Bems system comprises three main functions: Monitoring, Analysis, and Alerts and Recommendations. In terms of Monitoring, the system performs real-time monitoring of the building's operating status and energy consumption level in terms of: fuel, power, HACV, refrigeration, ovens, among others, depending on client needs. The Analysis function is responsible for detecting defects and analyzing equipment performance based on expert knowledge and available data. The Alerts and Recommendations function is responsible for generating real time breakdown alerts and issuing recommendations for reducing energy consumption. Among the main benefits to the Smart Bems system user are an increase in the value of their real estate, reduced building management costs, and preparation for dealing with environmental regulations.

First fuel (http://www.firstfuel.com/) is an energy management and control system that works with historical electricity consumption information (requires 1 year of information) versus information collected daily. With this real and historical energy consumption information, First Fuel gives the user information as to the building's response in regard to any kind of weather, hours of operation, key energy indicators, daily usage patterns, seasonal and peak loads analysis. These analyses are explained to the user simply and are supported with recommendations. The analysis can be updated quarterly and followed over time. The system generates customized recommendations for each building, and if the user adopts and implements any of these recommendations, the system monitors its impact on energy savings over time. Lastly, it should be noted that the system allows for the creation of a portfolio of buildings to control, which allows for a segmented approach to energy savings with regard to the existing groups of buildings and their energy consumption characteristics.

The Trend Bems system is designed to provide owners with satisfactory information which enables them to monitor and supervise the building in a way which provides a suitable working environment for its occupants. The building management system monitors and controls services such as heating, ventilation and air conditioning, so as to guarantee the highest level of operational efficiency and savings. This is achieved by maintaining an optimum balance between prevailing conditions, energy usage and operational requirements. The main system components are: Controllers, Supervisors, Networks, and On-site Devices. The controllers receive signals from field devices and following their programmed operating parameters, take action to control the plant's equipment. The Supervisors see or correct system data and provide a wide variety of energy analysis and maintenance functions. The Networks allow the devices to communicate over a physical distance which can be local, a wide area network, or remotely by using standard browser technology. In this way, the information can be accessed from anywhere in the world, ensuring full and continuous management access. The Field Devices send or receive data directly to/from the Controllers for local or remote monitoring and control. If an area is not measured or monitored it cannot be controlled. Among the advantages to be gained from the Trend system are: reduced building management costs and the elimination of energy wastage; comparison between actual consumption data and normal profiles; identification and communication of alarms; remote monitoring; backup copies; and detection of maintenance needs depending on conditions.

Spinwave systems has a product line developed to function as an energy management system (A3 line). Among the products available are wireless sensors (temperature, relative humidity, voltage, and dry contact), controllers, input and output devices, and gateways for integration with automation and cloud engine systems. The A3 line product integration comprises a mesh gateway that connects the wireless mesh network with databases hosted in the cloud and/or building automation systems. The mesh gateway radio nodes can support up to 140 wireless devices connected to the gateway's USB port. Up to two radios can be supported by each gateway. The system has a web server for configuration, commissioning and maintenance. The web client built into the gateway can send data and store it in a cloud for data analysis and performance dashboards. Data from the wireless device are accessible via Modbus TCP for integration with building automation systems. The wireless thermostat controls heating and cooling equipment, and is able to send messages to other wireless devices. The wireless sensors measure temperature, relative humidity, contact status, and voltage levels. The Ready-Modbus radio enables the input and output modules, controllers, electricity meters and other Modbus devices.

Finally, the Tracer Summit building automation system provides building control through a single integrated system. The system handles variables which can be programmed and managed such as temperature, lighting, scheduling, and energy consumption among others. The Tracer Summit system consists of Building Control Units (BCUs) and workstations that use Tracer Summit software. The BCUs provide centralized building control through communication with building equipment such as heating, ventilation and air conditioning (HVAC) equipment. The building operator uses the workstation or BCU screen to perform system operator tasks. The workstation communicates with the BCU through an Ethernet network. Remote access to the system is available using a modem in the BCU or an internet connection with a Tracer Summit Web Server. The Tracer Summit software turns complex requirements into simple, consistent, and reliable operations. Tracer Summit can control any type of HVAC equipment, but provides an additional Integrated Comfort System benefit when connected to Trane HVAC equipment. Tracer Summit can also be connected to other building systems such as fire alarm controls, among other applications.

All of the systems described above share the common characteristic of monitoring the building's energy and services consumption using sensors and communication means. Some of them provide operational and energy consumption recommendations based on the data obtained by the system.

Compared to existing systems, which are mostly based only on monitoring energy consumption, and which in some cases make recommendations based on an aggregate historical pattern, the present invention comprises an automated system for monitoring and managing energy efficiency in buildings, which periodically assesses investment alternatives based on energy simulations adjusted by reverse optimization of environmental parameters and user behavior. The inclusion of climatic conditions and the facility users' behavior, allow the system to operate in different environments and under different user conditions, or in facilities designed for different purposes, in a self-adaptive manner.

The energy efficiency monitoring and management system of the present invention operates through the acquisition of online data from sensors in the feed sources of the consumption groups (such as water for lavatories, water for toilets, electricity for lighting by sector, weak currents, electricity for HACV, fuel supply), internet communication, and data processing using a methodology that includes series construction, simulation, automatic parameter adjustment, and economic assessment. It delivers timely information about breakdowns, proposes solutions based on consumption patterns, and plans investments in energy efficiency by conducting economic assessments of such investments.

With respect to the main difference between the systems described in the prior art and the present invention, while the systems described in the prior art are limited to monitoring and generating recommendations for reducing energy consumption, the present invention further proposes automated and periodic economic assessment of investment alternatives based on energy simulations adjusted using reverse optimization of environmental parameters and user behavior. The system offers two distinct types of investment alternatives for improving energy efficiency and service usage: the reduction of overall consumption and the reduction of HACV consumption.

One of the advantages of the proposed invention compared to the IBM, Firstfuel and Tracer Summit commercial systems is precisely the ability to make economic assessments of energy efficiency investments alternatives through the reduction of energy consumption for HACV. Having recommendations based on these economic assessments can expedite and facilitate the building manager's decision making because the current systems can only identify areas for reducing consumption based on user behavior and only assess the obtained savings after the fact, without taking into account the investment associated with such improvement, and its relationship to future flows from the savings, i.e., the return on investment.

Accordingly, one of the advantages of the present invention is that it provides an automatic and accurate economic and technical assessment with regard to the implementation of various energy efficiency investments alternatives, thereby providing the administrator with a reliable decision-making tool, while eliminating the need for external consultants.

## DESCRIPTION OF THE DRAWINGS

Figure 1 shows a diagram of the energy monitoring system for buildings in general, with the components of the present invention.
Figure 2 shows a diagram of the measuring and acquisition device.
Figure 3 shows a system diagram describing the operation of the present invention.

## DESCRIPTION OF THE INVENTION

The present invention comprises an automated system for monitoring and managing energy efficiency in buildings, which periodically assesses investment alternatives based on energy simulations adjusted by reverse optimization of environmental parameters and user behavior. The system facilitates decision-making by facility managers as it continually identifies the most effective ways to reduce the consumption of water, HACV and electricity services. The simulations' optimization process, including climatic conditions and the facility users' behavior, allow the system to operate in different environments and under different user conditions, or in facilities designed for different purposes, in a self-adaptive manner.

The system comprises means for online data acquisition from consumption sensors, internet communication means and software processing means. The system delivers timely information about breakdowns, proposes solutions to consumption patterns, and plans investments in energy efficiency.

The energy efficiency monitoring and management system in institutional buildings of the present invention comprises online sensor measurement and data acquisition means; data transmission, reception and transfer means; processing, storage and user interface means, where the user interface (8) comprises three main modules: the alarm module (15), the monitoring module (16) and the investment options module (17).

The energy efficiency monitoring and management system in institutional buildings, of the present invention comprises measuring means which comprise measuring devices (2) which are sensors (S1, S2, S3, S4, S5, S6 and S7) specific to the variable being measured, where the sensors are connected by a shielded twisted pair (STP) cable to a data comprises data transmitting and receiving means comprising radio frequency modules such as Xbee (4) operating on the 2.4 GHz band employing the IEEE 802.15.4 (ZigBee) communication protocol belonging to the PAN (Personal Area Network) networks. And the monitoring and management system comprises data transfer means that transfers data from the facility's various measuring devices (2) to their respective workstation (5), where the data is collected, sorted and written to a text file for later delivery to the storage and user interface stage (8).

The Processing, Storage and User Interface means comprises a central server (6) that stores the data and generates a database (7) on which the data processing (software) is run and the results are displayed through the user interface (8) on the facility administrator's computer.

The present invention relates to a method for monitoring and managing energy efficiency in institutional buildings comprising the following stages:

a) Measurement;
b) Data Transmission, Reception and Transfer;
c) Processing, Storage and User Interface, where the user interface comprises three main modules: the alarm module (15), the monitoring module (16) and the investment options module (17).

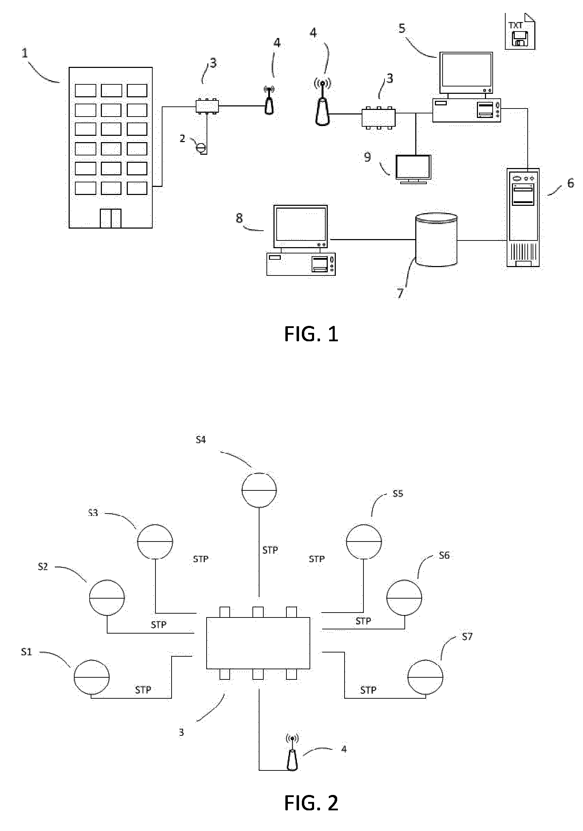

The operation of the network for monitoring and managing energy efficiency of the present invention comprises three stages: Measurement; Data Transmission, Reception and Transfer; Processing, Storage and User Interface. The three stages can be implemented jointly or separately. Figure 1 shows an operating diagram for the network for monitoring and managing energy efficiency in buildings which comprises three stages.

**Measurement:**

Given the typical distribution of hydraulic, electric power, and fuel feed networks, the design of the measurement system covers the main consumption points, i.e., water supply mains for each floor, and families of devices, electricity consumption meters for lighting, power and computer network by building (1) or by sector, as well as boilers or heat pumps within the facility. These systems are composed of measuring devices (2) which are sensors (S1, S2, S3, S4, S5, S6 and S7) specific to the type of variable being measured. The sensors are connected via shielded twisted pair (STP) cable to a data acquisition board (3) which is an Arduino electronic board, used for data acquisition (see Figure 2). Subsequently, information from the network is made available for wireless transfer by Xbee modules (4) connected to the different data acquisition boards (3). A diagram of the data measurement and acquisition device for a floor of a building is shown in Figure 2.

**Data transmission, reception and transfer:**

Xbee (4) modules are used to manage the data transmission and reception from each data acquisition board (3) to each serial port of the computers arranged as workstations (5) located in each building. The Xbee modules (4) are radio frequency modules working in the 2.4 GHz band employing the IEEE 802.15.4 (ZigBee) communication protocol networks belonging to the Personal Area Networks. Among its advantages are low power consumption, simplicity of construction, and the ability to use up to 65,000 different network combinations, allowing for the creation of large scale point-to-point and point-to-multipoint networks.

Once the data from the facility's various measuring devices (2) has been transferred to their respective workstation (5), the data is collected, sorted and written to a text file for later delivery to the storage and user interface stage (8).

Another task performed in the processing stage is the cyclic sampling of the data received at the workstation (5), which is done by controlling an LCD display (9) installed next to each workstation (5) using an Arduino-type a data acquisition board (3).

**Processing, Storage and User Interface:**

During this stage, the data received from each building (1) is stored on a central server (6) which consolidates and processes the information for the administrator's portfolio of buildings. In the central server (6) a consolidated database (7) is generated on which the data processing (software) is run, and the results are displayed through the user interface (8) on the facility administrator's computer, which offers a comprehensive view of the entire portfolio under management.

Through the user interface (8), the monitoring and management system of the present invention allows the user to access real-time information relative to the monitored building (1) or facility. The monitoring and management system is able to display consumption logs both graphically and numerically, indicating sample data characteristics for each buildings, and for the network generally. Among these data characteristic are: categorization of the facility, date and time the measurements were taken, variable measured (electricity, water or heating), monthly and annual average consumption, monetary cost of consumption, possible facility breakdown points, identification of gaps between actual use and predetermined consumption patterns, and portfolio of energy efficiency investments assessed economically for each building.

The user interface (8) comprises three main modules: the alarm module (15), the monitoring module (16) and the investment options module (17).

The alarm module (15) is responsible for displaying and issuing alerts as to the differences between historical and real consumption. It does so based on pre-established maximum allowable deviations, and the respective alarms are triggered if these deviations are surpassed, with an indication given of where the alarm was triggered. The system takes measurements at discrete small time intervals, which are used to build cumulative series. The new measurements are continually contrasted with the cumulative values so as to quickly detect anomalies and allow corrective measures to be taken in a timely manner.

The monitoring module (16) for its part shows real time consumption from an aggregate level down to the maximum detail possible depending on the measurement ranges of the sensors (3); in this way it is possible to navigate through the building's divisions, depending on the intended objective. The real cumulative consumption is presented in contrast to a predetermined consumption pattern according to the usage load for each enclosure or built area based on the cumulative series, thereby identifying gaps where it is possible to reduce or adjust consumption, and continuously delivering the largest deviations between the profile and the pattern. This allows the administrator to intervene in user behavior (consumption profile) or implement automation to achieve such reductions in consumption where there is potential or space for it.

Lastly, the investment options module (17) presents a summary containing the economic assessment of the alternatives for investment in energy efficiency and service usage. The present invention performs periodic energy and economic assessments to identify spaces for investments or recommendations as to energy efficiency (coatings, insulation, windows, HVAC systems, greywater recovery, etc.). When installing the system (hardware and software) an analysis of the existing facility is carried out through an energy simulation which takes into account the facility's current construction features. Improvement alternatives are developed according to simulations, based on the current features of the facility and the inclusion of certain sets of optional upgrades to lower energy consumption and deliver savings. Subsequently an economic analysis regarding the implementation of the alternatives is made and compared to the baseline scenario, obtaining the net present value (NPV), internal rate of return (IRR) and the payback period (Payback) of the investment resulting from the ultimate implementation of the proposed alternatives. The flow of information required for the user interface (8) to work properly begins with the completion of three parallel activities: sensor data collection (3), gathering of building envelope information (10), and the generation of the alternatives (11) from the predetermined investment in energy efficiency. Subsequently this information is stored in a database (7), on the basis of which, if the alternative is a reduction in energy consumption for HACV, an energy simulation (12) using self-adjusted parameters is carried out. Once the energy consumption of the alternative is known, the corresponding economic assessment (13) is performed. If the alternative leads to a decrease in other types of consumption (e.g. water, or electricity for lighting) the saving (14) are calculated, followed by the associated economic assessment (13). The present invention delivers investment recommendations, prioritized based on their impact (reduced consumption expected from the investment) and the associated investment costs. The economic assessments are conducted periodically to determine when the investments should be made in terms of their profitability. The outcomes of an economic assessment vary over time, mainly as a result of changes in the prices of the inputs needed for the investment, and of the fuels used. Such information is updated automatically or manually by the user on a periodic basis. The estimated energy demand is corrected automatically over time with the real data collected.

The simulation of a building's energy consumption is carried out by estimating the following energy flows: Transmission losses($H_T$), ventilation losses($H_V$), solar heat gain ($Q_S$) and lastly the internal gain($Q_i$). The sum of the above mentioned flows multiplied by some constant terms provides the building's annual energy requirements. The calculation procedure begins with the estimation of the volume of air and the useable floor area based on the building's volume and the total surface area. Subsequently transmission losses are estimated, which depend on the building's envelope components and its orientation. For each component (roof, walls, windows, floor and other) the thermal transmittance is calculated based on the thermal properties of the component materials (concrete, wood, simple glass, etc.) to then multiply by the surface area and a temperature correction factor by component, thereby obtaining the transmission loss for each component. The sum of the individual losses is the building's total transmission loss. Then ventilation losses are estimated, which depend on the volume of air flowing through the building multiplied by the number of air changes according to the building's use (production, warehouse, shopping center, etc.) and by a constant factor. After having calculated the transmission and ventilation losses, the solar and internal gains follow. The solar gains both in winter and summer depends on the surface of the building's envelope, the percentage of shading from other nearby buildings, the percentage of glass in the windows and the type of glass, multiplied by constant factors depending on the orientation of the envelope's component. It should be noted that solar gains in winter are considered in the energy simulations for heating consumption ($Q_h$) and the solar gains in the summer for the consumption of cold ($Q_f$). The constant terms change between winter and summer for each orientation. Finally, the internal gain is calculated according to the building's use, where there is a specific gain for each use, which is multiplied by its useable floor area, thereby obtaining total internal gain. The cooling requirement is calculated in an equivalent manner.

The present invention proposes an automatic and periodic economic assessment of the investment alternatives based on energy simulations adjusted by reverse optimization of environmental parameters and user behavior. For an economic assessment of the alternatives, the invention distinguishes between two type of investment alternatives related to improving energy efficiency and service usage: reduction of consumption in general, and reduction of energy consumption for HACV.

An economic assessment of an alternative to reduce overall consumption is carried out in the conventional manner by evaluating the potential savings from the investment over a determined number of years compared to the initial investment.

An assessment of an alternative to reduce consumption for HACV requires an energy simulation where savings are estimated from the simulation of the building's performance including the new improvements and updated energy costs, and where the investment is periodically corrected as a function of the updated prices for materials and equipment. This generates a periodically updated portfolio of investments, and gives alerts at times when it is advisable to invest, either because consumption reached a critical level or because the price of materials and equipment has decreased. When assessing an alternative to reduce consumption, a report is generated which includes indicators such as net present value, internal rate of return, and the payback period for the investment, which detail the profitability of the proposed consumption reduction alternative.

To carry out this economic assessment it is necessary simulate the building's behavior in terms of energy consumption, with the proposed investment in place, and compare the results with the real current consumption read by the sensors, in order to calculate the savings potential offered by the investment. To create an accurate simulation, the approach relies on a cross optimization process, whereby the energy consumption of the building is estimated using a multiple regression model employing atmospheric variables (temperature, irradiance, wind speed, etc.) and user behavior variables (air changes and internal gains), thereby obtaining the coefficients which are then contrasted with those used in the simulation model, based primarily on the building's envelope and its characteristics. The simulation model for annual energy consumption ($Q_h$) for heating is based on the following formula:

$$Q_h = \beta_1 \Sigma H_{Ti} + \beta_2 N\, V_n - \beta_3 \Sigma H_{sj} - q_i A_n$$

where $\beta_1$ is the factor associated with transmission losses, $\beta_2$ is the factor associated with ventilation losses, and $\beta_3$ is the factor associated with solar gains in the winter. The three factors are characteristic of the climate and user behavior. $H_T$ pertains to transmission losses. $\Sigma H_{Ti}$ is the sum total of the areas of the building envelope's components multiplied by their respective thermal transmittances and a temperature correction factor in accordance with DIN V 4108 standard. N is the number of air changes, and $V_n$ is the net volume of air in the building. $\Sigma H_{sj}$ is the sum total of the glazed areas in each cardinal direction multiplied by their respective frame percentage correction factors, shadings and coverages, by each type of glass' own reflection factor, and by the average irradiance of the corresponding orientation, as per DIN V 4108. These are factors that depend on the building's envelope, orientation, relationship between eaves and windows, and shadows, considered as intrinsic variables for each building. $q_i$ Is the specific internal gain per square meter accumulated over the heating period (W/m$^2$) and $A_n$ is the useable area of the building in m$^2$.

Estimating these same losses but as a function of climatic variables and behavior, the estimated daily consumption can be written with the following model:

$$\hat{Q}_h = \beta'_1 \bar{T}_{day} + \beta'_2 \left( \bar{T}_{día}(N) \right) + \beta'_3 \bar{I}_{directa \atop día} + \beta'_4 calef_{on/off} + \beta'_5 holiday + \alpha'$$

Where $\bar{T}_{día}$ is the building's average daily temperature (N) is the estimated number of changes of air $\bar{I}_{directa \atop día}$ is the average daily direct irradiance, $\alpha'$ is the model's constant for the accumulated internal gains, $calef_{on/off}$ a binary variable with a value of 1 when the heating is on and 0 otherwise, and lastly *feriado* also a binary variable with a value of 1 if the measurement day is a holiday and 0 otherwise.

$\beta'_1$, $\beta'_2$, $\beta'_3$, $\beta'_4$, $\beta'_5$ are the regression model's coefficients, estimated using ordinary least squares (OLS) and $\alpha'$. By using daily average variables, the model represents the daily energy consumption in kWh, and each measurement of $\hat{Q}_h$ represents dashboard observation to determine the model's factors. To obtain the consumption for the heating period, the daily consumptions are added considering the average daily exogenous variables multiplied by determined factors.

With the calculations of the accumulated heating requirements from the regression model the coefficient values of the simulation model ($\beta_1$, $\beta_2$, $\beta_3$, and $q_iA_n$, respectively) can be obtained, as the respective components of: transmission losses, ventilation losses, solar gains and internal gains, have been equalized.

The first estimate of N is an arbitrary number according to the building's type of use. The value of N is adjusted through error minimization when comparing the simulation with the regression model, while the internal gains correspond to the model's constant $q_iA_n = \alpha'$.

In the case of energy consumption for cooling, the same procedure is followed, except that the solar gains and internal gains increase energy consumption.

The energy consumption terms for the simulated model $(Q_f)$ and for the regression model $(\hat{Q}_f)$ respectively are the following:

$$Q_f = \delta \Sigma H_{Ti} + \delta_2 N\, V_n - \delta_3 \Sigma H_{sj} - q_i A_n$$

$$\hat{Q}_f = \delta'_1 \bar{T}_{día} + \delta'_2 \left(\bar{T}_{día} f(N)\right) + \delta'_3 \bar{I}_{directa \atop día} + \delta'_4 a/c_{on/off} + \delta'_5 feriado + \gamma'$$

Where $\delta_1$ is the factor associated with transmission losses, $\delta_2$ is the factor associated with ventilation losses, $\delta_3$ is associated with the solar gains in summer, and $q_iA_n$ is a constant term associated with the internal gains in the cooling period. Next, $\delta'_1$, $\delta'_2$, $\delta'_3$, $\delta'_4$, $\delta'_5$ and $\gamma'$ are the OLS estimators of the regression model's coefficients for cooling consumption.

Through the procedure described, starting with the measurements recorded by the sensor system, it is possible to adjust the parameter values used in the simulation, thereby allowing for better predictions as to the effect that investments in the building such as, sun shades, window replacement, envelope insulation, mechanical and self-controlled air renewal systems, and heat recovery equipment may have.

The present invention employs the energy consumption savings, calculated by contrasting the current situation with the forecasted one, taking into account the different solutions and the prices of the different optimization solutions, to carry out multiple economic assessments using the net present value method.

The sum total of the previously estimated requirements gives the total annual estimated power consumption for the building which, as mentioned above, is contrasted with the measurements taken, with the objective of adjusting the simulation's parameters to obtain a more accurate simulation.

The present invention comprises a combination of technologies using Arduino, ZigBee sensors, and decision support software.

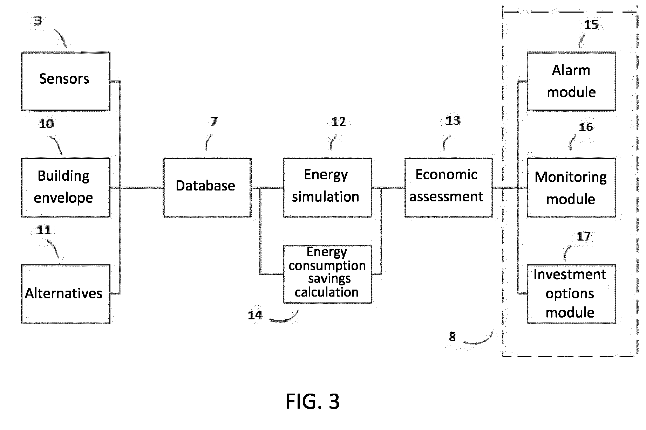

The present invention, using data processing and the user interface (8), makes available to the user the alarm display (15) for abnormal consumption, the real time monitoring (16) of the different consumptions, and the identification of potential energy savings gaps with respect to the predetermined pattern, and the result of the economic assessments (13) presented as investment options (17). Figure 3 presents a diagram of the operations described above.

Compared to existing systems, where most are only based on monitoring energy consumption, and in some cases making recommendations based on an aggregate historical patterns, the monitoring and management system of the present invention provides a full economic assessment regarding the implementation of each of the improvement options in terms of its profitability and the payback period for the investment. The system automatically and periodically evaluates investment alternatives based on energy consumption simulations. These simulations are adjusted by reverse optimization of environmental parameters and user behavior, and they allow the system to operate in different environments and with different users or facility conditions, in a self-adaptive fashion. The economic assessment mentioned above is performed periodically, given the variability of the prices of the energy and materials required for the implementation of the improvement alternatives. It is for this reason that ongoing monitoring is undertaken to determine at what point in time it is economically advisable to make the investment, thereby making the system a reliable economic and energy decision-making tool for the facility manager.

Given the design features of the monitoring and management system of the present invention, not only can it be applied to buildings but also to any installation wanting to control and improve operating conditions in terms of energy consumption and fuels.

Examples of applications include:

Application 1: the system is fully implemented in a set of buildings related to an organization, whether public or private, such as hospitals, universities, schools, clinics and health networks, run by an administrator. A building is equipped with flow sensors to measure water consumption in sinks, showers and toilets, to measure lighting consumption by sectors in each building, to measure the consumption of weak currents, to measure energy consumption for HACV (either fuel or electricity). The data is collected by Arduino data acquisition boards located in the different sectors, and then the data is transferred via Zigbee modules to workstations located in each building. From each building the information is sent over the internet to the server for data processing and storage. Through the internet and the user interface (8) the server sends the following decision making information to the administrator: the alarm display (15) for abnormal consumption, the real time monitoring (16) of the different consumptions and the identification of potential energy savings gaps with respect to the predetermined pattern, and the result of the economic assessments (13) presented as investment options (17).

**Application 2:** the system is partially implemented in one or more buildings that have a monitoring system already installed. In this case, only the Processing, Storage and User Interface stage is implemented. The monitored data is used as system input variables which are processed by the methods described above to then, via the user interface (8), provide the user with the alarm display (15) for abnormal consumption, the real time monitoring (16) of the different consumptions and the identification of potential energy savings gaps with respect to the predetermined pattern, and the result of the economic assessments (13) presented as investment options (17).

**Application 3:** Factories, to monitor and manage energy consumption in different departments and processes. In this manner, for a company with different facilities, a portfolio of all of the facilities is created to monitor and compare the facilities among themselves. Sensors are installed in each department, process, or other monitoring unit defined by the administrator in terms of the degree of independence of its electrical circuits, water supply pipes, etc., depending on the monitoring unit's features. Each unit becomes a component in the factory manager's portfolio, so the monitoring and management system is applied similarly in separate buildings. The consumption measurements for each unit are recorded by the measuring devices (2) and are subsequently processed in the central server (6), stored in the database (7), and analyzed by the administrator through the user interface (8). It should be noted that the three stages of the system can be applied here, or only stage three if there are monitoring sensors.

**Application 4:** Shopping centers, with the portfolio consisting of the existing stores and departments. In this way the system compares and monitors between stores and departments. Sensors are installed in each store according to the degree of independence of its electrical circuits, water supply pipes, etc. Each store and common areas of the shopping center becomes a component in the administrator's portfolio, so the monitoring and management system is applied similarly in separate buildings. The consumption measurements for each store are recorded by the measuring devices (2) and are subsequently processed in the central server (6), stored in the database (7), and analyzed by the administrator through the user interface (8). It should be noted that the three stages of the system can be applied here, or only stage three if there are monitoring sensors.

Based on the above, it can be seen that the monitoring and management system of the present invention applies to any building or group of buildings where energy consumption is properly sectorized, enabling monitoring by units or departments.

**Claims**

1. An energy efficiency monitoring and management system for institutional buildings **CHARACTERIZED in that** it comprises online sensor measurement and data acquisition means; data transmission, reception and transfer means; processing, storage and user interface means, where the user interface (8) comprises three main modules: the alarm module (15), the monitoring module (16) and the investment options module (17).

2. The system of claim 1 **CHARACTERIZED in that** the measuring means which comprise measuring devices (2) corresponding to sensors (S1, S2, S3, S4, S5, S6 and S7) are specific to the variable being measured, where the sensors are connected by a shielded twisted pair (STP) cable to a data acquisition board (3).

3. The system according to claims 1 or 2 **CHARACTERIZED in that** the data transmitting and receiving means comprise radio frequency modules such as Xbee modules (4) operating on the 2.4 GHz band employing the IEEE 802.15.4 (ZigBee) communication protocol belonging to the PAN (Personal Area Network) networks.

4. The system according to claims 1, 2, or 3, **CHARACTERIZED in that** it comprises data transfer means that transfers data from the facility's various measuring devices (2) to their respective workstation (5), where the data is collected, sorted and written to a text file for later delivery to the storage and user interface stage (8).

5. The system according to claims 1, 2, 3, or 4 **CHARACTERIZED in that** the Processing, Storage and User Interface means comprise a central server (6) that stores the data and generates a consolidated database (7) upon which the data processing (software) is run, and the results are displayed through the user interface (8) on the facility administrator's computer.

6. The system according to claim 1, **CHARACTERIZED in that** the alarm module (15) generates alarms if the deviations are exceed, indicating the detail of where the alarm is occurring, and displays and alerts about the differences between the historical and current consumption using discrete measurements over small time intervals which are continually contrasted with the cumulative values so as to quickly detect anomalies and allow corrective measures to be taken in a timely manner.

7. The system according to claim 1, **CHARACTERIZED in that** the monitoring module (16) shows consumption in real time from an aggregate level down to the maximum detail possible depending on the measurement ranges of the sensors (3), the real cumulative consumption is presented in contrast with a consumption pattern predetermined according to the usage load for each enclosure or built area, thereby determining gaps where it is possible to reduce or adjust consumption and continuously reporting on the largest deviations between the profile and the pattern.

8. The system according to claim 1, **CHARACTERIZED in that** the investment options module (17), delivers a summary with the economic analysis of the energy efficiency investments alternatives and of the service usage and carries out and economic assessment of the implementation of the alternatives and compares it to the baseline scenario, thereby obtaining the net present value (NPV), the internal rate of return (IRR) and the payback period (Payback) for the investment resulting from the ultimate implementation of one of the proposed consumption reduction alternatives.

9. A method for monitoring and managing energy efficiency in institutional buildings **CHARACTERIZED in that** is comprises the stages of:

   a) Measurement;
   b) Data transmission, reception and transfer;
   c) Processing, Storage and User Interface, where the user interface comprises three main modules: the alarm module (15), the monitoring module (16) and the investment options module (17).

10. The method of claim 9, **CHARACTERIZED in that** the measurement stage comprises measuring with specific measuring devices (2) such as sensors (S1, S2, S3, S4, S5, S6 and S7) specific to the variable being measured at the main consumption points, i.e., water supply mains for each floor and families of appliances, electricity meters for the lighting, boilers or heat pumps, power and computer network by building (1) or by sectors.

11. The method of claim 9 or 10, **CHARACTERIZED in that** data transmission, reception and transfer stage comprises data acquisition (3) to each serial port of the computers arranged as workstations (5) located in each building; for data transfer XBee modules (4) which are radio frequency modules operating in the band 2.4 GHz band employing the IEEE 802.15.4 (ZigBee) communication protocol belonging to the Personal Area Networks are used.

12. The method of claim 9, 10, or 11, **CHARACTERIZED in that** it comprises the collection of the data after the data has been transferred from the facility's various measuring devices (2) to their respective workstation (5), subsequently the data is sorted and written to a text file for later delivery to the storage and user interface stage (8).

13. The method of claim 9, 10, 11, or 12 **CHARACTERIZED in that** the processing stage comprises the cyclic sampling of the data received at the workstation (5) by controlling an LCD display (9) installed next to each workstation (5) using an Arduino-type to data acquisition board (3); the storage and user interface stage comprises storing the data on a central server (6) which consolidates and processes the information relating the administrator's portfolio of buildings, and generates a consolidated data base (7) on which the data processing (software) is run, and the results are displayed through the user interface (8) on the facility administrator's computer, which offers a comprehensive view of the entire portfolio under management.

14. The method of claim 9, **CHARACTERIZED in that** it comprises displaying and alerting, via the alarm module (15), the differences between the historical and real-time measurements of consumption, so that in accordance with pre-established maximum allowable deviations, the respective alarms are triggered if these deviations are surpassed, with a detailed indication given of where the alarm was triggered; measurements are taken in small time intervals which are used to build cumulative series; the new measurements are continually contrasted with the accumulated values so as to quickly detect anomalies and allow corrective measures to be taken in a timely manner.

15. The method of claim 9, **CHARACTERIZED in that** it comprises monitoring consumption in real time from an aggregate level down to the maximum detail possible, depending on the measurement ranges of the sensors (3). In this way it is possible to navigate through the building's divisions depending on the intended objective, contrasting with a predetermined consumption pattern according to the usage load for each enclosure or built area based on the cumulative series, thereby determining gaps where it is possible to reduce or adjust consumption and continuously delivering the largest deviations between the profile and the pattern.

16. The method of claim 9, **CHARACTERIZED in that** it comprises delivering investment options (17) based on energetic and economic assessments to reveal investment opportunities or energy efficiency recommendations.

17. The method of claim 9, **CHARACTERIZED in that** it comprises energy efficiency recommendations that include variables including coatings, insulation, windows, HVAC systems, greywater recovery, and it performs a prior analysis of the facility using an energy simulation where the improvement alternatives are developed based on the simulation of the facility's current features, and the inclusion of certain sets of optional upgrades to lower energy consumption.

18. The method of claim 17, **CHARACTERIZED in that** it comprises conducting a subsequent economic analysis as to the implementation of the alternatives and comparing it to the baseline scenario to obtain the net present value (NPV), the internal rate of return (IRR) and the payback period (Payback) of the investment resulting from the ultimate implementation of one of the proposed alternatives, where the flow of information required for the user interface (8) to work properly begins with three parallel activities: sensor data collection (3), gathering of building envelope information (10), and the generation of the alternatives (11) from the predetermined investment in energy efficiency.

19. The method of claim 18, **CHARACTERIZED in that** it comprises storing the information in a database (7), on the basis of which, if the alternative is a reduction in energy consumption for HACV, an energy simulation (12) using the previously describe self-adjusted parameters is carried out. Once the energy consumption of the alternative is known, the corresponding economic assessment (13) is performed.

20. The method of claim 18, **CHARACTERIZED in that** it comprises storing the information in a database (7), on the basis of which, if the alternative is the decrease of an overall consumption rate, such as for water or electricity for lighting, the savings (14) from the investment are calculated, followed by the associated economic assessment (13).

21. The method of claims 9 - 20, **CHARACTERIZED in that** it comprises performing economic assessment periodically to determine at what point in time it is economically advisable to make the investment in terms of its profitability, where the outcome of an economic assessment varies over time mainly as a result of changes in the price of the inputs needed for investment, and of the fuels and services used.

**FIG. 1**

**FIG. 2**

FIG. 3

## INTERNATIONAL SEARCH REPORT

| International application No. |
| --- |
| PCT/CL2014/000078 |

**A. CLASSIFICATION OF SUBJECT MATTER**

(CIP) G06Q50/06, 50/16; G06Q30/00, G06F17/00 (2015.01)

According to International Patent Classification (IPC) or to both national classification and IPC

**B. FIELDS SEARCHED**

Minimum documentation searched (classification system followed by classification symbols)

(CIP) G06Q50/06, 50/16; G06Q30/00, G06F17/00

Documentation searched other than minimum documentation to the extent that such documents are included in the fields searched

Electronic data base consulted during the international search (name of data base and, where practicable, search terms used)

Esp@cenet, EPOQUE, Google Patents, Google Scholar, INAPI, IEEE

**C. DOCUMENTS CONSIDERED TO BE RELEVANT**

| Category* | Citation of document, with indication, where appropriate, of the relevant passages | Relevant to claim No. |
| --- | --- | --- |
| X <br><br> Y | US2013/0103440 A1 (IMANI, Behzad) 25 Abril 2013 <br> the entire document ; especially paragraphs 0014, 0015, <br> 0018-022, 044-047, Figures 1 and 2. | 1, 4-10, 12, 14-17 y 18-21 <br><br> 1-21 |
| X | WO 2012071485 A2 (HIRL, Joseph) 31 Mayo 2012 <br> the entire document ; especially paragraphs 0040 , 0041 , 0052 , 0077 , figures 1 and 2 | 1, 4-5, 7-9, 12, 15-16 y 18-20 |
| Y | SZEMES, P.T. et al. "Energymon": Development of Wireless Sensor Network based Decision Support System to Monitor Building Energy Performance. En Advanced Intelligent Mechatronics (AIM), 2011 IEEE/ASME International Conference. 2011: 31 - 36 <br> ISSN: 2159-6247 <br> DOI: 10.1109/AIM.2011.6027002 <br> the entire document . | 1-21 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25/03/2015 | 27/04/2015 |

| Name and mailing address of the ISA/ | Authorized officer |
| --- | --- |
| Facsimile No. | Telephone No. |

Form PCT/ISA/210 (second sheet) (January 2015)

**INTERNATIONAL SEARCH REPORT**

International application No.

PCT/CL2014/000078

C (Continuation).     DOCUMENTS CONSIDERED TO BE RELEVANT

| Category* | Citation of document, with indication, where appropriate, of the relevant passages | Relevant to claim No. |
|---|---|---|
| Y | MORALES DOMINGUEZ, Angélica. Controlador Inteligente para ahorro de energía por detección de rutinas. Trabajos de grado Ingeniería. Pontificia Universidad Javeriana, Bogotá, 2011. <URL: http://hdl.handle.net/10554/7071>, the entire document | 1-21 |
| A | FR2991483 A1  (BOUYGUES IMMOBILIER and BOUYGUES IMMOBILIER) 06 Diciembre 2013 the entire document | |
| A | XUDONG, M. et al. Supervisory and Energy Management System of Large Public Buildings. En Proceedings of the 2010 IEEE International Conference on Mechatronics and Automation. 2010: 928 - 933 ISSN: 2152-7431 DOI: 10.1109/ICMA.2010.5589969 the entire document | |

Form PCT/ISA/210 (continuation of second sheet) (January 2015)

INTERNATIONAL SEARCH REPORT
Information on patent family members

International application No.

PCT/CL2014/000078

| | | |
|---|---|---|
| US 2013103440 A1 | 25-04-2013 | NONE |
| WO 2012071485 A2 | 31-05-2012 | WO 2012071485 A3    19-07-2012<br>WO 2012071485 A2    31-05-2012<br>US 2012173456 A1    05-07-2012<br>US 8583531   B2    12-11-2013<br>US 2014040089 A1    06-02-2014 |
| FR2991483    A1 | 06/12/2013 | NONE |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7781910 B
- US 8055386 B

- US 6327541 B